# EUROPEAN PATENT APPLICATION

(11) **EP 4 305 959 A1**
(43) Date of publication of application: **17.01.2024**
(21) Application number: 23163815.6
(22) Date of filing: 23.03.2023
(51) Int. Cl.: A01K 97/12

(54) **BITE DETECTOR FOR DETECTING MOTION OF A FISHING LINE**

(30) Priority: 25.03.2022 GB 202204268
(71) Applicant: Wolf International Limited, Brentwood Essex CM13 3AB (GB); Hosiden Besson Limited, Hove, East Sussex BN3 7EZ (GB)
(72) Inventor: ADDICOTT, Owen Phillip, East Sussex, BN3 7EZ (GB); GREEN, Julian Barry, East Sussex, BN3 7EZ (GB); FOX, Clifford Royston, Essex, CM13 3AB (GB)
(74) Representative: Carpmaels & Ransford LLP

(57) **Abstract**

Described is a bite detector for detecting motion of a fishing line. The bite detector comprises a line probe comprising a line rest portion, the line rest portion being configured to contact a fishing line. The bite detector further comprises an accelerometer connected to the line probe. The accelerometer is configured to detect movement of the line probe caused by movement relative to the line probe of a fishing line in contact with the line rest portion.

## Description

### Field of the Invention

The present invention relates generally to a bite detector for detecting motion of a fishing line. Specifically, the present invention relates to an improved bite detector that uses an accelerometer configured to detect movement of a fishing line.

### Background

Various types of electronic fishing appliances have been developed for assisting anglers whilst fishing. Examples include bite detectors for indicating line motion resulting from a fish bite on a fishing line.

A bite detector assists an angler by giving warning that a fish may have contacted a fishing line and/or a hook attached to the line, and that it may have the hook in its mouth ready to be caught. While this is sometimes apparent to the operator of a fishing line, this is not always the case, typically because an angler is not closely monitoring the fishing line. For example, an angler might have multiple fishing lines set up at one time, preventing close monitoring.

A number of different technologies are known and are used in bite detectors to determine that a bite has occurred. A well known and industry preferred technology is the use of a piezo-electric sensor that is placed in contact with the fishing line, thus generating electrical current when the fishing line moves. Such sensors are simple and have no moving parts, which improves reliability. Further technologies include the use of a roller wheel which can move with a fishing line, which is magnetically or visually coupled to a sensor inside the bite detector. Such systems have an advantage of improved waterproofing, as moving parts do not need to extend through the housing of the bite detector.

While such technologies work well, the inventors of the present invention have recognised that it is generally difficult to adjust the parameters of such sensors once they are installed in a bite detector. In particular, it is difficult to control the sensitivity of these sensors. While high sensitivity is often required, in some scenarios this sensitivity needs to be reduced to avoid false bite indications. For instance, a strong current in the water, rain or other inclement weather, or even vibrations from someone walking past the fishing rod, make it preferable to reduce the sensor sensitivity to avoid false bite indications. Nevertheless, in the absence of such conditions a high sensitivity is preferred to improve the chance that a bite is detected.

The inventors have also recognised that it can be difficult to derive additional data and information from pre-existing bite detection sensors, beyond simply the fact that a bite has taken place. It would be advantageous to provide such data to anglers to help them improve their angling.

Consequently, it would be advantageous to provide an improved bite detector.

### Summary of the Invention

The present invention solves the above problems by providing a bite detector comprising a line probe. The line probe comprises a line rest portion that is configured to contact a fishing line. The bite detector comprises an accelerometer connected to the line probe, and the accelerometer is configured to detect movement of the line probe caused by movement relative to the line probe of a fishing line in contact with the line rest portion. As well as having minimal moving parts and being very reliable, accelerometers can be easily adjusted during use, allowing their sensitivity to bites, and other parameters, to be adjusted by an angler before or even during an angling session. Additionally, accelerometers are able to provide additional data beyond that of piezoelectric sensors, for example, such as indicating the direction of movement of a fishing line.

In a further aspect of the invention, the bite detector defines a notch defining a notch axis, the notch being configured to support the fishing line and permit linear movement of the fishing line along the notch axis. The notch may have a V-shaped cross section. The line rest portion may comprise the notch. The notch permits forwards and backwards movement of the fishing line, along the axis of an accompanying fishing rod, and helps improve contact between the fishing line and the line probe. The bite detector may further comprise a rod rest to support a fishing rod and further improve contact.

In a further aspect of the invention, the bite detector further comprises a housing containing the accelerometer. The line rest portion protrudes from the housing. The line probe further comprises a connection portion inside the housing. The accelerometer is coupled to the connection portion. the line rest portion is at a first end of the line probe, and the connection portion is at a second end of the line probe. The line rest portion may be connected to the connection portion by an axle. The connection portion may comprise a mounting protrusion, the bite detector may further comprise an accelerometer PCB, the accelerometer may be fixed to the accelerometer PCB, the accelerometer PCB may comprise a mounting aperture, and the mounting protrusion extends through the mounting aperture. The accelerometer or accelerometer PCB may be fixed to the connection portion with adhesive, and optionally the mounting protrusion may be fixed to the mounting aperture with adhesive. Movement of the line probe in a first direction may result in movement of the accelerometer in a second direction opposite to the first direction. The housing may protect the accelerometer while allowing the line probe to interface with the fishing line, while the mounting protrusion and accelerometer PCB may allow a strong connection between the line probe and the accelerometer to ensure that movement of the line probe causes simultaneous movement of the accelerometer that can be detected.

In a further aspect of the invention, the housing further comprises a housing aperture, the line probe protrudes from the housing through the housing aperture, and the line probe and housing aperture are dimensioned to permit movement of the line probe when a fishing line in contact with the line probe moves with respect to the line probe. This arrangement ensures that dampening of the movement of the line probe by the housing is minimised, improving the detection of movement.

In a further aspect of the invention, the housing further comprises a bush comprising a bush aperture. The bush is positioned in the housing aperture and the line probe is movably mounted within the bush aperture. The line probe and bush aperture are dimensioned to permit movement of the line probe when a fishing line in contact with the line probe moves with respect to the line probe. The bush helps seal the housing aperture while permitting line probe movement.

The bush comprises a cradle configured to support the line probe while permitting the line probe to move with respect to the bush with a rocking motion. The cradle may comprise a curved surface, the line probe may further comprise a curved surface configured to contact the curved surface of the cradle, and the curved surfaces may be complimentary or partially complimentary, and the curved surfaces may permit the rocking motion. The cradle curved surface may be a concave surface, wherein the concave surface is substantially cylindrical, and the line probe curved surface may be a convex surface, wherein the convex surface is substantially cylindrical. The respective axes of the substantially cylindrical surfaces may be parallel to each other and both perpendicular to the notch axis. The cradle minimises resistance to line probe movement, increasing the sensitivity to detection of movement.

In a further aspect of the invention, the line probe comprises a line probe flange extending at least partially around the bush. The bush may also comprise a bush flange, and the line probe flange may extend around the bush flange, and may be concentric with the bush flange. The line probe flange and bush flange may allow line probe movement while preventing water ingress into the housing.

In a further aspect of the invention, the bush further comprises a mounting portion and a shoulder portion protruding from the bush. The mounting portion is configured to protrude through housing aperture. The shoulder portion comprises a contact surface complimentary to the surface of the housing adjacent to the housing aperture. The contact surface contacts the surface of the housing adjacent to the housing aperture. The bush may be fixed to the housing with adhesive. In particular, the contact surface may be fixed to the surface of the housing adjacent to the aperture with adhesive. The mounting portion may have an interference fit with the housing aperture. An outer portion of the shoulder portion may comprise an inclined surface that tapers towards the contact surface in a direction away from the bush aperture. These features of the bush improve the sealing of the housing aperture and help direct water away from the line probe and the housing aperture, improving the water resistance of the bite detector.

In a further aspect of the invention, the accelerometer or accelerometer PCB is in direct contact with and fixed to the line probe. This improves the transmission of movement and vibrations from the fishing line to the line probe to the accelerometer.

In a further aspect of the invention, the accelerometer may be a three-axis accelerometer, improving the sensitivity of the accelerometer to movement in different directions.

In a further aspect of the invention, the bite detector further comprises a main PCB. The accelerometer is electrically connected to the main PCB by a flexible connection, with the flexible connection optionally being a ribbon cable or flexible flat cable. The flexible connection may be configured to bend and apply a force to the line probe when a fishing line is in contact with the line rest portion, the force being in a direction towards the line rest portion and being configured to improve contact between the fishing line and the line rest portion. Alternatively, the flexible connection may be configured to be permanently bent and apply a constant force to the line probe, and the flexible connection may be configured bend more and apply a greater force to the line probe, when a fishing line is in contact with the line rest portion, the force being in a direction towards the line rest portion and being configured to improve contact between the fishing line and the line rest portion. The accelerometer may be physically coupled to the bite detector by exactly two physical connections, wherein the physical connections are the flexible connection and the line probe. By minimising physical connections with the accelerometer, movement of the line probe is better transferred to the accelerometer to improve movement detection, without further physical connections dampening this movement.

In a further aspect of the invention, the accelerometer is configured to operate in an idle mode with reduced power consumption until the accelerometer detects movement greater than a predetermined accelerometer activation threshold. The accelerometer activation threshold may be adjustable, optionally adjustable by a user of the bite detector. The idle mode helps to reduce the power consumption of the bite detector.

In a further aspect of the invention, the bite detector may comprise a spigot for connecting the bite detector to a bank stick and/or an onboard power supply, optionally a battery, configured to power any electronic components of the bite detector.

In a further aspect of the invention, the bite detector comprises a processor. The accelerometer or accelerometer PCB may comprise the processor, or the processor may be connected to the accelerometer. The processor may be mounted to the main PCB, with the accelerometer electrically connected to the processor by the flexible connection.

In a further aspect of the invention, the accelerometer is configured to generate a movement signal in response to movement or each movement that has a magnitude greater than an accelerometer movement threshold that is detected, and is further configured to send each movement signal to the processor. The accelerometer movement threshold may be adjustable, and may be adjustable by a user of the bite detector. The accelerometer movement threshold may be used to prevent movements that are too small, and not caused by a fish biting the fishing line, causing a false bite indication. The processor may be configured to analyse each movement signal to determine that a fishing line in contact with the line probe has moved. This allows the processor to determine that a bite has occurred.

In a further aspect of the invention, detecting movement of the line probe comprises detecting the direction of movement of the line probe, and may comprise detecting movement of the line probe in either direction along the notch axis. Each movement signal may indicate a direction of movement of the line probe, and the processor may be configured to analyse each movement signal to determine the direction of movement of a fishing line in contact with the line probe. Determining the direction of movement of a fishing line in contact with the line probe may comprise determining that the fishing line is moving in a first direction or a second direction along the notch axis or in the plane containing the notch axis, the second direction being opposite the first direction. Allowing the direction of the fishing line to be determined allows the user to determine whether a fish, which may have the line and an associated hook and bait in its mouth, is causing the fishing line to run backwards towards the bank, the rod, and the bite detector, or whether the fish is running forwards with the fishing line away from the bank, the rod, and the bite detector. Whether the line is moving backwards or forwards affects how best to manoeuvre rod and "strike" the fish with the hook to secure it to the fishing line and ensure successful recovery. Direction detection functionality therefore helps improve angling.

In a further aspect of the invention, the processor is further configured to determine that a fishing line in contact with the line probe is vibrating without net movement. This allows small vibrations to be detected, which may indicate that a bite has occurred but that a run has not yet started, allowing the user to adjust how they strike the fish and improving their angling.

In a further aspect of the invention, the accelerometer is further configured to periodically generate a device orientation signal indicating the orientation of the device and send each device orientation signal to the processor. The processor is configured to analyse each device orientation signal to determine the current orientation of the bite detector. Analysing the movement signal and determining the direction of movement of a fishing line in contact with the line probe may further comprise adjusting each movement signal to account for the current orientation of the bite detector. The accelerometer may be configured to periodically generate the device orientation signal only if the accelerometer has not detected a change in movement or change in movement above an orientation movement threshold for a minimum period. The threshold and/or period of time are adjustable and may be adjustable by a user. Generating and analysing orientation signals may ensure more accurate direction detection. Specifically, when the accelerometer is at rest, it will measure a gravitational "acceleration" of approximately 1g, and the direction of this with respect to the accelerometer will vary depending on the orientation of the accelerometer with respect to the ground. By subtracting the device orientation signal from the movement signal, a more accurate indication of the direction of movement of the fishing line can be determined. Furthermore, generating device orientation signals only when the accelerometer has not detected a change in movement or a change in movement above a threshold for a fixed period of may increase certainty that the current orientation of the bite detector that will be determined is based on device orientation signals that accurately indicate the direction that gravity is acting in, rather than movements of the line probe.

In a further aspect of the invention, analysing the movement signal and determining the direction of movement of a fishing line in contact with the line probe may comprise taking an average of two or more movement signals to produce an average movement signal and determining the direction of movement of the fishing line using the average movement signal. Using an average movement signal reduces the effects of any anomalous movements on the determination of direction and reduces false indications of direction.

In a further aspect of the invention, the bite detector further comprises an alarm configured to issue an alert when movement is detected by the accelerometer.

In a further aspect of the invention, the processor may be configured to instruct the alarm to issue the alert when the processor determines that a fishing line in contact with the line probe has moved by greater than an alert movement threshold. The alert movement threshold may be adjustable, optionally adjustable by a user of the bite detector. The alert movement threshold may be used to prevent movements that are too small, and not caused by a fish biting the fishing line, causing a false bite indication.

In a further aspect of the invention, the alert is configured to indicate the detected direction of movement of the fishing line. The alert may comprise a forwards movement alert that indicates to the user that the line is moving forwards when the processor determines that a fishing line in contact with the line probe is moving in the first direction. The alert comprises a backwards movement alert that indicates to the user that the line is moving backwards when the processor determines that a fishing line in contact with the line probe is moving in the second direction. The processor may be further configured to instruct the alarm to issue a directionless movement alert when the processor determines that a fishing line in contact with the line probe is vibrating without net movement. This alert functionality allows direction information to be quickly conveyed to the user to improve their ability to strike the fish.

In a further aspect of the invention, the processor comprises a direction detection mode in which the processor is configured to instruct the alarm to issue the alert after the processor has determined the direction of movement of a fishing line in contact with the line probe. The processor may further comprise a directionless detection mode in which the processor is configured to instruct the alarm to issue the alert and not determine the direction of movement of a fishing line in contact with the line probe. The processor further comprises a hybrid detection mode in which the processor is configured to instruct the alarm to issue the alert before the processor completes determining the direction of movement of a fishing line in contact with the line probe. The processor may be further configured to instruct the alarm to issue the alert until the processor determines the direction of movement of a fishing line in contact with the line probe, and be configured to instruct the alarm to modify the alert to indicate the detected direction of movement of the fishing line once the processor determines the direction in which the fishing line is moving. The processor may be further configured to instruct the alarm to issue the directionless movement alert until the processor determines the direction of movement of a fishing line in contact with the line probe, and be configured to instruct the alarm to issue the forwards movement alert or the backwards movement alert once the processor determines the direction in which the fishing line is moving. The processor may be configured to switch between the detection modes, and optionally permit the detection mode to be switched by a user. The direction detection mode provides increased data on the nature of the bite to the user and increases the likelihood that a fish is successfully recovered. The directionless detection mode may provide a faster response and allow increased sensitivity compared to the first mode. The hybrid detection mode may allow higher sensitivities to be used (for example, a lower accelerometer movement threshold or alert movement threshold) and a user of the bite detector to be alerted to the bite faster, while the direction of the fishing line is still accurately detected. The use of such modes and the ability to switch between them improves the versatility and adaptability of the bite detector to different scenarios with different needs.

In a further aspect of the invention, the alarm may be configured to continue the alert for a predetermined alert time after movement is no longer detected. The predetermined alert time may be adjustable, and may be adjustable by the user. This allows the alert to be prolonged, increasing the chance that the alert is heard by the user.

In a further aspect of the invention, the alert comprises an audio alert, and the bite detector optionally allows one or more parameters, such as the volume, tone, and duration of the audio alert, to be adjusted. The alert may additionally or alternatively comprise a visual alert, and the bite detector optionally allows one or more parameters, such as the brightness, the colour, and the duration of the visual alert, to be adjusted. The alert may additionally or alternatively comprise a vibratory alert, and the bite detector optionally allows one or more parameters, such as the magnitude, the frequency, and the duration of the vibratory alert, to be adjusted.

In a further aspect of the invention, the processor comprises a security mode which can be activated. In the security mode the processor is further configured to analyse each movement signal to determine whether the housing of the bite detector has been moved by more than a theft threshold. The processor is configured to instruct the alarm to issue a theft alert when the processor determines that the housing of the bite detector has been moved by more than a theft threshold. The security mode may be activatable by a user. In the security mode, the alarm acts as a theft alarm to prevent unauthorised tampering or theft of bite detector.

In a further aspect of the invention, the processor of the bite detector is configured to communicate with a remote unit. The bite detector further comprises a wireless transmitter, and the processor is configured to communicate with the remote unit via the wireless transmitter. The processor may be configured to send an alarm signal to the remote unit when movement is detected. The processor may be configured to send the direction of movement to the remote unit when movement is detected. Sending the direction of movement to the remote unit may comprise sending a signal to the remote unit indicating whether a fishing line is moving in the first direction or in the second direction along the notch axis or in the plane containing the notch axis. Sending the direction of movement to the remote unit may comprise sending a signal to the remote unit indicating whether a fishing line is vibrating without net movement. The wireless transmitter may be a wireless transceiver, and the processor may be configured to adjust one or more parameters of the bite detector based on a control signal from the remote unit received by the wireless transceiver, and the one or more parameters may comprise the accelerometer activation threshold, the accelerometer movement threshold, the accuracy threshold, the alert movement threshold, the alert time and the parameters of the alert, the orientation movement threshold, the minimum period, the detection mode of the processor and whether the security mode is active. The use of such a remote unit allows the user to be more easily alerted to detected movement, and may allow simpler and easier adjustment of the bite detector.

A further aspect of the invention relates to a remote unit configured to communicate with the bite detector. The remote unit comprises a wireless receiver adapted to receive an alarm signal from the bite detector indicating that the accelerometer of the bite detector has detected movement of a fishing line. The remote unit further comprises an alarm unit configured to alert a user to the detected movement. The alarm signal may further indicate the direction of movement of a fishing line, and the alarm unit may be further configured to alert a user to the direction of movement of the fishing line. Alerting the user to the direction of movement may comprise alerting the user as to whether the fishing line is moving in a first direction or a second direction, wherein the second direction is opposite the first direction. The alarm signal may further indicate that a fishing line in contact with the line probe is vibrating without net movement, and the alarm unit may be further configured to alert the user that the fishing line is vibrating without net movement. The alarm unit may be configured to continue to alert the user for a predetermined time after movement is no longer detected.

In a further aspect of the invention, the remote unit may further comprise a user interface and a control unit. The wireless receiver may be a wireless transceiver, and the control unit may be adapted to transmit via the wireless transceiver at least one control signal to the bite detector for controlling the bite detector in response to a user interacting with the user interface. The user interface may allow the user to adjust, via the control unit, one or more parameters of the bite detector. The parameters may include one or more of the accelerometer activation threshold, the accelerometer movement threshold, the accuracy threshold, the alert movement threshold, the alert time, the parameters of the alert, the orientation movement threshold, the minimum period, the detection mode of the processor and whether the security mode is active.

A further aspect of the invention relates to a kit of parts comprising the remote unit and the bite detector.

A further aspect of the invention relates to a computer-implemented method. The method comprises receiving one or more accelerometer movement signals, analysing the one or more movement signals and determining that the one or more accelerometer movement signals indicate that a fishing line has moved. Determining that the one or more accelerometer movement signals indicate that a fishing line has moved may comprise determining the direction of movement of the fishing line. Determining the direction of movement of the fishing line may comprise determining that the fishing line is moving in a first direction or a second direction, wherein the second direction is opposite the first direction. Determining the direction of movement of a fishing line may comprise determining that the fishing line is vibrating without net movement. The method may further comprise analysing periodic accelerometer orientation signals to periodically determine the current orientation of the accelerometer. Determining the direction of movement of the fishing line may comprise adjusting the direction of movement of the fishing line to account for the current orientation of the accelerometer. Analysing the one or more movement signals may comprise taking an average of two or more movement signals to produce an average movement signal, and determining the direction of movement of the fishing line may comprise determining the direction of movement of the fishing line using the average movement signal. The computer-implemented method may implement many of the above-described advantages of the bite detector.

Further aspects of the invention relate to a processor configured to perform the computer-implemented method, a computer program product comprising instructions which, when executed by a processor, cause the processor to carry out the computer-implemented method, and a computer-readable medium comprising instructions which, when executed by a processor, cause the processor to carry out the computer-implemented method. Further aspects of the invention relate to a kit of parts comprising the processor, the computer program product or the computer-readable medium and the bite detector, optionally also the remote unit.

Further aspects of the present invention are described below and in the claims which follow.

### Brief Description of the Drawings

Specific embodiments of the present invention are described in greater detail below in conjunction with the accompanying drawings in which:
Figure 1 is a plan view of an exemplary bite detector interfacing with a fishing rod which comprises a fishing line.
Figure 2 is a plan view of the bite detector shown in figure 1.
Figure 3 is a partial sectional view of the bite detector, fishing rod and fishing line shown in figure 1.
Figure 4 is a sectional view of the bite detector of figure 1.
Figure 5 is a schematic view of components of the bite detector of figure 1 protruding through a depicted portion of a housing of the bite detector.
Figure 6 is a sectional view of the components shown in figure 5.
Figure 7 is an exploded view of the components shown in figure 5.
Figure 8 is an exploded section view of the components shown in figure 5.
Figure 9 is a schematic view showing the effect that applied forces may have on the components shown in figure 5.
Figure 10 is a schematic view of a remote unit for use with a bite detector

### Detailed Description

Throughout this specification and the claims which follow, the word "comprise" and variations such as "comprises" and "comprising", will be understood to mean that the following integer, step, group of integers or group of steps is included but that other integers, steps, groups of integers or groups of steps are not excluded. By contrast, the word "consist" and variations such as "consists" and "consisting of", will be understood to mean that the following integer, step, group of integers or group of steps is included and that other integers, steps, groups of integers or groups of steps are excluded.

Throughout this specification and the claims which follow, where method steps are described these steps may be carried out in any order, unless it is apparent from the context that one particular method step must be carried out prior to another method step, or unless the chronological order of the method steps is explicitly stated.

### Bite Detector

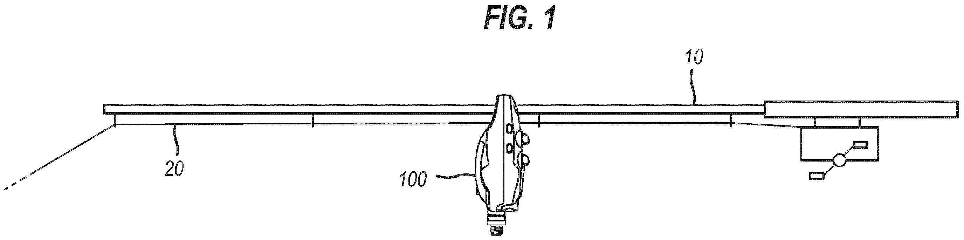

An exemplary bite detector 100 will now be described with reference to the figures. Figure 1 shows bite detector 100 interfacing with fishing rod 10 which comprises fishing line 20, such that bite detector 100 can detect movement of fishing line 20 when fishing line 20 is bitten by a fish or other aquatic lifeform.

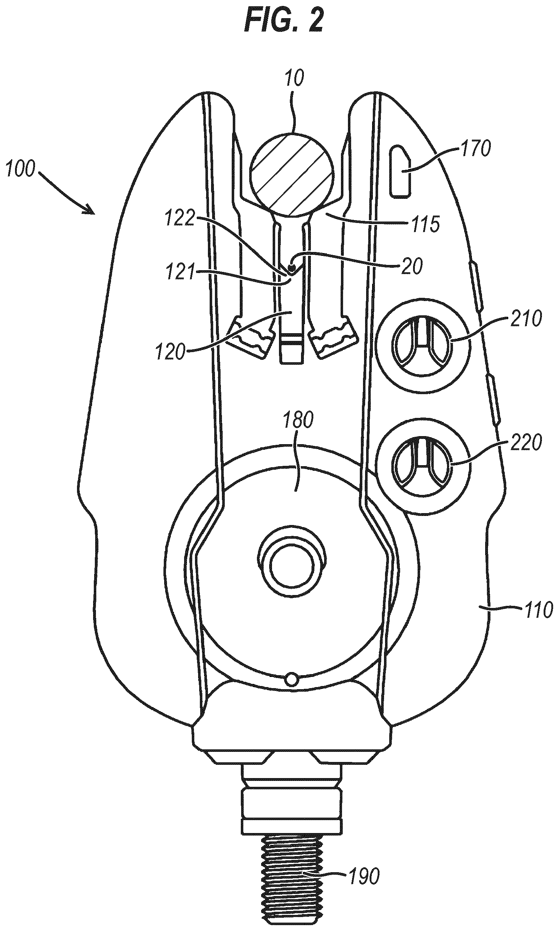

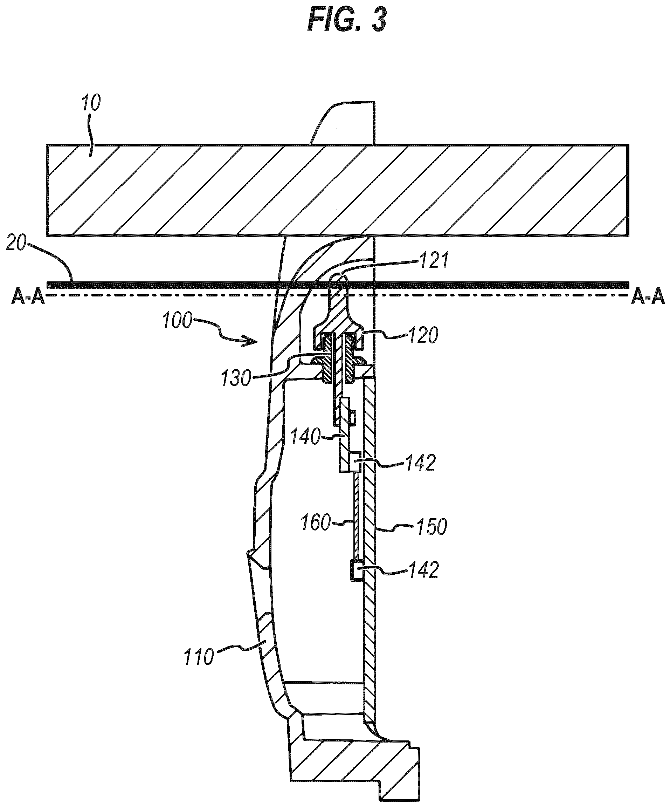

As shown by figures 2 to 4, bite detector 100 comprises line probe 120 comprising line rest portion 121 which is depicted as being in contact with fishing line 20 of fishing rod 10. Bite detector 100 comprises accelerometer 200 (see figure 3) connected to line probe 120. Accelerometer 200 is configured to detect movement of line probe 120 caused by movement relative to line probe 120 of fishing line 20 in contact with line rest portion 121. Any movement or vibration of line probe 120 caused by fishing line 20 will itself trigger movement of accelerometer 200, which will be detected by accelerometer 200.

Bite detector 100 may define a notch 122 which supports fishing line 20 and permits linear movement of fishing line 20 either along a notch axis A-A or in the plane containing notch axis A-A. As depicted in figure 2, in bite detector 100 line rest portion 121 comprises notch 122, but other arrangements are possible. In particular, notch 122 of line rest portion 121 has a V-shaped cross section, but other cross sections, such as a U-shaped cross section, for example, are also possible.

Bite detector 100 may also comprises a rod rest 115, an example of which is shown in figure 2. Rod rest 115 may support fishing rod 10 when fishing line 20 is supported by line rest portion 121.

Bite detector 100 may further comprise a housing 110. Housing 110 contains accelerometer 200, and may contain further components. Line probe 120 protrudes from housing 110, and in particular, for example as depicted in figure 2, line rest portion 121 of line probe 120 protrudes from housing 110. In the depicted example, housing 110 comprises housing aperture 112, and line probe 120 protrudes from housing 110 through housing aperture 112. Housing aperture 112 and line probe 120, in addition to any other components that may or may not be present, may be dimensioned to permit movement of line probe 120 when fishing line 20 in contact with line probe 120 moves with respect to line probe 120. Accordingly, movement of fishing line 20 can result in movement of line probe 120 and hence assist in movement being detected by accelerometer 200.

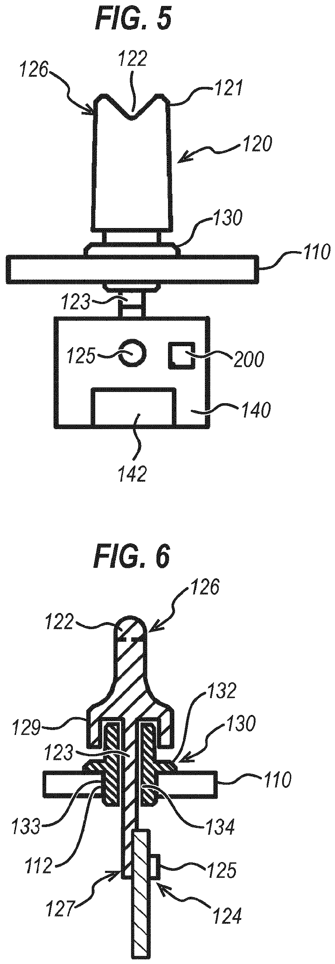

Figures 5 to 8 show exemplary line probe 120 and related exemplary components in greater detail. Line probe 120 may comprise connection portion inside housing 110, with accelerometer 200 coupled to connection portion 124. Line rest portion 121 may be at a first end 126 of line probe 120, and connection portion 124 may be at a second end 127 of line probe 120. Axle 123 connects first end 126 of line probe 120 to second end 127 of line probe 120 and protrudes through housing 110. Connection portion 124 may comprise mounting protrusion or arm 125.

Bite detector 100 may further comprise an accelerometer PCB 140 to which accelerometer 200 is mounted or fixed. Accelerometer PCB 140 may further comprise a mounting aperture 144. Accelerometer 200 may be connected to line probe 120 by mounting protrusion 125 passing through mounting aperture 144. Accelerometer PCB 140 may be fixed to line probe 120 with adhesive, and in particular mounting protrusion 125 may be fixed to mounting aperture 144 using adhesive. Alternatively, accelerometer 200 may be directly mounted or fixed directly to line probe 120, and may be mounted or fixed using adhesive.

Bite detector 100 may further comprise bush 130. Bush 130 comprises bush aperture 134 and is positioned in housing aperture 112. Line probe 120 is movably mounted within bush aperture 134. Line probe 120 and bush aperture 134 are dimensioned to permit movement of line probe 120 when fishing line 20 in contact with line probe 120 moves with respect to line probe 120. Accordingly, movement of fishing line 20 can result in movement of line probe 120 and hence assist in movement being detected by accelerometer 200

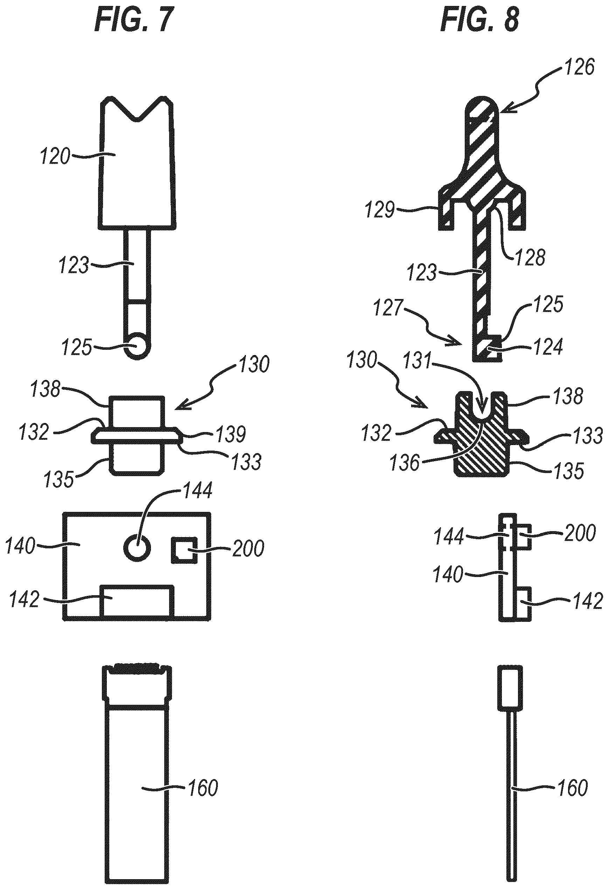

As shown in figure 8, bush 130 may comprise cradle 131 that supports line probe 120 while permitting line probe 120 to move with respect to bush 130 with a rocking motion. In a particular example, cradle 131 comprises a curved surface 136, and line probe 120 further comprises curved surface 128 configured to contact curved surface 136. In the illustrated example, curved surfaces 128 and 136 are complimentary, but they may alternatively be substantially complimentary or partially complimentary. For example, when placed together so that they are touching each other, at least 50%, optionally 60, 70, 80 or 90% of curved surface 128 may be in physical contact with some of curved surface 136. As depicted curved surfaces 128 and 136 may be convex and concave surfaces respectively, and one or both of surfaces 128 and 136 may also be cylindrical, or at least substantially cylindrical, surfaces. The respective axes of the cylindrical or substantially cylindrical surfaces may be parallel or substantially parallel to each other. The respective axes may be perpendicular or substantially perpendicular to the plane containing notch axis A-A. Alternatively, curved surfaces 128 and 136 may be spherical, or at least partially spherical.

In use, line probe 120, through curved surface 128, may rotate or rock about curved surface 136 of bush 130. As shown in figures 5 and 6, accelerometer 200 may be mounted to connection portion 124 at second end 127 of line probe 120, while line rest portion 121 is at first end 126 of line probe 120. In contrast, curved surface 128 is part way between first end 126 and second end 127. As such, rotation or rocking of line probe 120 about curved surface 136 of bush 130 causes accelerometer 200 to move in the opposite direction to line rest portion 121.

Bush 130 may further comprise bush flange 138 that extends away from housing 110. Bush flange at least partially circumscribes cradle 131, and may fully circumscribe cradle 131.

Line probe 120 may comprise a corresponding line probe flange 129. Line probe flange 129 may extend from first end 126 of line probe 120 towards bush 130. Line probe flange 129 may extend at least partially around bush flange 138. For example, line probe flange 129 may be concentric with bush flange 138. The cross sections of line probe flange 129 and bush flange 138 along the axis of bush aperture 134 may have any suitable shape, such a circle, an oval, a square or a rectangle. The presence of the two flanges helps seal bite detector 100 and prevent water and moisture ingress, while still permitting line probe 120 to move, thus assisting accelerometer 200 in detecting movement of fishing line 20.

Bush 130 further comprises mounting portion 135 and shoulder portion 132. Mounting portion 135 is configured to protrude through housing aperture 112. Shoulder portion 132 comprises a contact surface 133. Contact surface 133 is complementary to the outer surface of housing 110 that is adjacent to housing aperture 112 and is configured to contact this surface when mounting portion 135 protrudes through housing aperture 112. Bush 130 may be fixed to housing 110 with adhesive, and in particular contact surface 133 may be fixed to the outer surface of housing 110 that is adjacent to housing aperture 112 with adhesive. Additionally and/or alternatively, mounting portion 135 may have an interference fit with housing aperture 112. An outer portion of shoulder portion 132 may further comprise inclined surface 139, for example as shown in figure 8, which may taper towards contact surface 133 in the direction away from bush aperture 134, so as to encourage water to flow away from housing aperture 112 and improve waterproofing.

Bite detector 100 may be splashproof, water resistant or even waterproof. For example, features such as any of bush flange 138, line probe flange 129, shoulder portion 132, inclined surface 139, and the use of interference fits and/or adhesive as described above may assist with ensuring that bite detector is splashproof, water resistant or waterproof.

Accelerometer 200 may be a three-axis accelerometer such that it can detect acceleration in three directions. Alternatively, accelerometer 200 may be a single axis or a dual axis accelerometer. Accelerometer 200 may be any type of suitable accelerometer, and may for example be a MEMS accelerometer.

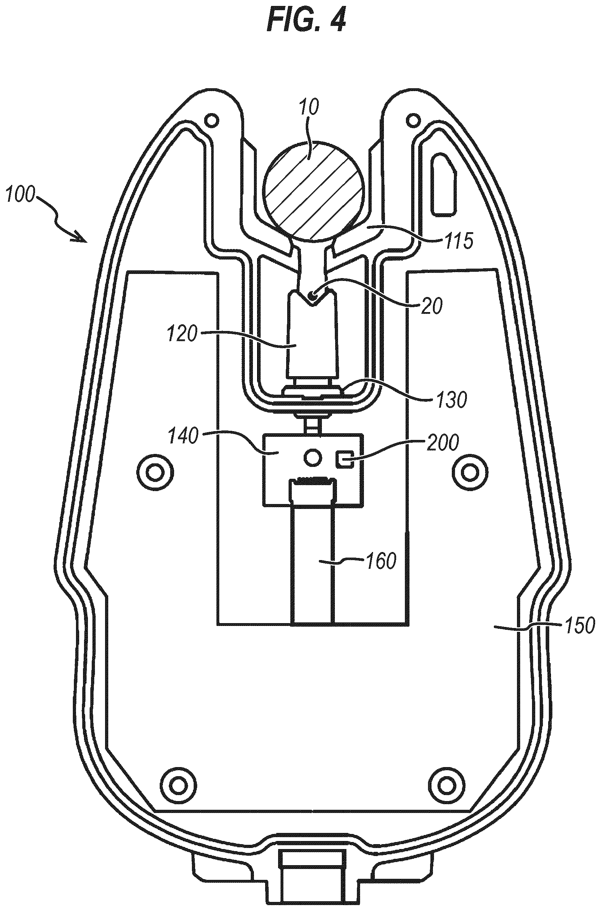

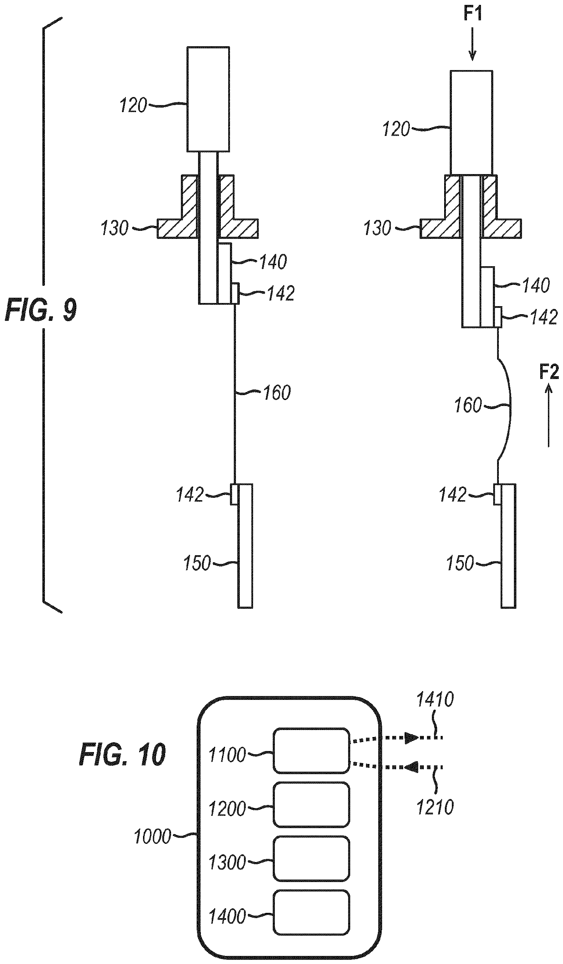

Bite detector 100 may comprise a main PCB 150, as best shown in figures 3 and 4. Accelerometer 200 is electrically connected to main PCB 150. The electrical connection may be provided by a flexible connection 160, such as a ribbon cable or a flexible flat cable. Flexible connection 160 may connect to each of accelerometer PCB 140 and main PCB 150 using respective FPC connectors 142, for example. As best exemplified by figure 9, when fishing line 20 is in contact with line rest portion 121, a force F1 is applied by line 20 onto line probe 120 in the direction of the bite detector 100. In other words, line probe 120 is pushed "downwards", towards the bite detector, from the point of view used in figures 3, 4 and 9. Flexible connection 160 may be configured to bend, for example as shown, in response to force F1, and consequently apply a counteracting force F2 to line probe 120 in a direction towards line rest portion 121. In other words, counteracting force F2 of flexible connection 160 pushes "upwards", from the point of view used in figures 3, 4 and 9. Counteracting force F2 pushes line rest portion 121 into improved contact with fishing line 20, which increases the friction force between line rest portion 121 and fishing line 20, thus increasing the sensitivity of accelerometer 200 to movement of fishing line 20.

Flexible connection 160 provides a second connection between accelerometer 200 and the remainder of bite detector 100, in addition to line probe 120. In particular, the physical connections between accelerometer 200 and the remainder of bite detector 100 may consist of these two connections. In other words, there are exactly two physical connections between accelerometer 200 and the remainder of bite detector 100, namely line probe 120 and flexible connection 160. The lack of any further connections, in combination with the flexibility of flexible connection 160, ensures that accelerometer 200 is not prevented from moving when line probe 120 moves as a result of fishing line 20 moving, thus further increasing the sensitivity of accelerometer 200 to movement of fishing line 20.

Accelerometer 200 may be configured to operate in an idle mode with reduced power consumption until the accelerometer detects movement greater than a predetermined accelerometer activation threshold. The accelerometer activation threshold may be adjustable, and may be adjustable by a user of the bite detector.

Bite detector 100 may comprise a number of additional features, such as a spigot 190 for connecting the bite detector to a bank stick. Additionally, bite detector 100 comprises an onboard power supply, which may be a battery, configured to power all of the electronic components of the bite detector.

### Signal Processing

Bite detector 100 comprises a processor. In the embodiment illustrated in the figures, the processor is mounted to main PCB 150, and accelerometer 200 is electrically connected to the processor by flexible connection 160. However, alternative structural arrangements are possible, such as the accelerometer itself comprising the processor, or the processor being mounted on accelerometer PCB 140. Alternatively, in other embodiments a remote device may comprise the processor, and the accelerometer and processor may be connected to wireless transceivers for communicating with each other.

When accelerometer 200 detects movement of fishing line 20 in contact with line rest portion 121, accelerometer 200 generates a movement signal in response to the movement, and sends the movement signal to the processor. The movement signal may indicate the magnitude of the movement, or may simply indicate that movement has occurred. The accelerometer may generate multiple movement signals in response to detecting multiple distinct movements or a single movement lasting longer than a threshold time.

Accelerometer 200 may optionally only generate a movement signal and send the signal to the processor if a given movement has a magnitude greater than an accelerometer movement threshold. If a movement has a magnitude of less than the accelerometer movement threshold, it may be that the movement is simply too small to be detected, or the accelerometer may detect the movement but not generate a movement signal because the magnitude of the movement is insufficient. This can be useful, for instance, where small movements are likely to be caused by external factors, such as inclement weather or vibrations caused by a person moving near to the bite detector. The accelerometer movement threshold may be adjustable, and may be adjustable by the user of the bite detector, allowing operation of the bite detector to be tailored to avoid false alarms from external factors.

The processor, once it receives one or more movement signals from accelerometer 200, may analyse the one or more movement signals to determine whether these indicate that fishing line 20 in contact with line probe 120 has moved.

### Direction Detection

An advantage of accelerometers, and in particular multi-axis accelerometers such as two and three axis accelerometers, is that they allow a direction of movement to be detected as well as simply the fact that movement has occurred. As such, in bite detector 100, detecting movement of line probe 120 caused by movement relative to the line probe of fishing line 20 in contact with line rest portion 121 may comprise detecting the direction of movement of line probe 120. In otherwords, accelerometer 200 may be configured to detect the direction of movement of line probe 120 caused by movement relative to line probe 120 of a fishing line 20 in contact with line rest portion 121.

As explained in greater detail below, when accelerometer 200 detects the direction of movement of line probe 120, this allows the processor to determine the direction of movement of fishing line 20. This allows the user to determine whether a fish, which may have the line and an associated hook and bait in its mouth, is causing line 20 to run backwards towards the bank, rod 10 and bite detector 100 (i.e. to the right in the point of view used in figure 1), or whether the fish is running forwards with line 20 away from the bank, rod 10 and bite detector 100 (i.e. to the left in the point of view used in figure 1). Whether the line is moving backwards or forwards affects how best to manoeuvre rod and "strike" the fish with the hook to secure it to line 20 and ensure successful recovery. As in the illustrated implementation, accelerometer 200 can detect movement of line probe 120 either along notch axis A-A or in the plane containing notch axis A-A, which corresponds to detecting movement in the forwards and backwards direction.

When detecting direction, each movement signal generated by accelerometer 200 may indicate the direction of movement of line probe 120, in addition to or instead of indicating the magnitude of the movement or simply indicating that the movement has occurred. When the processor receives one or more movement signals indicating the direction of movement of line probe 120, the processor analyses the one or more movement signals to determine the direction of movement of fishing line 20. For example, when analysing the movement signals and determining the direction of movement of fishing line 20, the processor accounts for rotation or rocking of line probe 120 about curved surface 136 of bush 130 causing accelerometer 200 to move in the opposite direction to line rest portion 121.

In particular, the processor may determine that fishing line 20 is moving in either a first direction or a second direction, opposite to the first direction, either along notch axis A-A or in the plane containing notch axis A-A. The first direction may correspond with the forwards direction as discussed above (i.e. when line 20 is being pulled away from the bank, to the left in the point of view used in figure 1) and the second direction may correspond with the backwards direction as discussed above (i.e. when line 20 is running backwards towards the bank, to the right in the point of view used in figure 1). For instance, if one or more accelerometer movement signals indicate that line rest portion 121 may have moved substantially in the first or forwards direction, the processor may conclude that fishing line 20 is moving forwards. Alternatively, if one or more accelerometer movement signals indicate that line rest portion 121 may have moved substantially in the second or backwards direction, the processor may conclude that fishing line 20 is moving backwards.

The processor may be further configured to determine that the movement of line probe 120 indicates that fishing line 20 is vibrating without net movement. For instance, the detection of a number of repetitive and small forwards and backwards movements of equal magnitude may indicate that fishing line 20 is vibrating backwards and forwards without any actual net movement.

The processor may be further configured to determine the orientation of bite detector 100 to improve the accuracy of direction detection. Specifically, when accelerometer 200 is at rest, it will measure an "acceleration" of approximately 1g, and the direction of this with respect to accelerometer 200 will vary depending on the orientation of accelerometer 200 with respect to the ground. The orientation of accelerometer 200 with respect to bite detector 100 is fixed, and so by measuring the direction of the gravitational force on accelerometer 200, the orientation of bite detector 100 with respect to the ground can be determined. Accelerometer 200 may therefore be configured to periodically generate a device orientation signal using this "acceleration" and send this to the processor. A device orientation signal may be generated for example, every second, every 5 seconds, every 10 seconds, every 30 seconds or longer as required. The processor may be configured to analyse each device orientation signal and determine the current orientation of bite detector 100. For example, the processor may take a moving average of 2, 3, 4, 5, 6, 7, 8, 9, 10 or more device orientation signals to determine the current orientation of bite detector 100.

Device orientation signals may only be generated by accelerometer 200 or analysed by the processor if, for example, accelerometer 200 has not detected a change in movement or change in movement above a threshold for a period of time. If line probe 120 is moving at the time that a device orientation signal is generated, the device orientation signal will comprise both a gravitational component and an unknown movement component, preventing the accurate measurement of device orientation. Generating device orientation signals only when accelerometer 200 has not detected a change in movement or a change in movement above a threshold for a fixed period of time may increase certainty that the current orientation of bite detector 100 that will be determined is based on device orientation signals that accurately indicate the direction that gravity is acting in, rather than movements of line probe 120.

Analysing each movement signal received from accelerometer 200 by the processor may comprise adjusting each movement signal to account for the current orientation of bite detector 100, for example the most recent measurement of the current orientation of bite detector 100. For example, if bite detector 100 is oriented with notch axis A-A parallel to the ground (i.e. the orientation shown in figure 1), then the "raw" movement signal indicates forwards and downwards "movement" of line probe 120, with the downwards component being caused by the gravitational component of the movement signal. By subtracting the device orientation signal from the movement signal, a more accurate indication of the direction of movement of fishing line 20 can be determined.

Analysing each movement signal received from accelerometer 200 and determining the direction of movement of fishing line 20 by the processor may alternatively or additionally comprise taking an average of movement signals to produce an average movement signal, and determining the direction of movement using the average movement signal. The average may be a moving average, for example. For example, the processor may take an average or moving average of 2, 3, 4, 5, 6, 7, 8, 9, 10 or more device orientation signals to produce the average movement signal and determine the direction of movement of fishing line 20. Additionally or alternatively, the processor may provide a weighting to each movement signal when calculating the direction of movement, and may provide a greater weighting to consecutive movement signals in the same direction.

### Alarm

Bite detector 100 may further comprise an alarm that issues an alert when movement is detected by accelerometer 200. For example, the processor may be configured to instruct the alarm to issue the alert when the processor determines that fishing line 20 has moved. The processor may be configured to instruct the alarm to issue the alert when the processor determines that fishing line 20 fishing line has moved by greater than an alert movement threshold. The alert movement threshold may be adjustable, and may be adjustable by a user of the bite detector. This can be useful, for instance, where small movements are likely to be caused by external factors, such as inclement weather or vibrations caused by a person moving near to the bite detector, and can help avoid false alarms.

The processor may be configured to instruct the alarm to issue an alert that indicates the detected direction of movement of fishing line 20. For instance, when the processor determines that fishing line 20 in contact with line probe 120 is moving forwards (i.e. to the left in the point of view used in figure 1), the alert may comprise a forwards movement alert that indicates to a user of bite detector 100 that line 20 is moving forwards. When the processor determines that fishing line 20 in contact with line probe 120 is moving backwards (i.e. to the right in the point of view used in figure 1), the alert may comprise a backwards movement alert that indicates to the user that line 20 is moving backwards. Additionally or alternatively, the processor may be configured to instruct the alarm to issue a directionless movement alert when the processor determines that fishing line 20 in contact with line probe 120 is vibrating without net movement.

Bite detector 100 may have a number of different operating modes allowing optimisation of its usage. In a first or direction detection operating mode, the processor is configured to instruct the alarm to issue the alert after the processor has determined the direction of movement of fishing line 20. In the first mode, the alert may further indicate the direction of movement of fishing line 20. This mode provides increased data on the nature of the bite to the user and increases the likelihood that a fish is successfully recovered.

In a second or directionless detection mode, the processor is configured to instruct the alarm to issue the alert, while the processor does not determine the direction of movement of line 20 (despite its ability to do so). While less information is provided to the user, the second mode may provide a faster response. In particular, as the processor does not need to determine the direction of fishing line 20, fewer calculations are required, increasing the speed at which movement is detected.

In addition, the second mode may allow increased sensitivity compared to the first mode. In particular, when fishing line 20 starts to move, line probe 120 will initially start to move in the direction of travel of line 20 due to friction between line 20 and line probe 120. However, as line probe 120 continues to move, this may cause increasing tension in the connection between line probe 120 and the remainder of bite detector 100, or increasing compression of line probe 120 against other components of bite detector 100 (e.g. bush 130), which may then cause line probe 120 to slip backwards towards its home position if these forces exceed the friction between line probe 120 and line 20. If such backwards slip occurs, this tension or compression will begin to reduce relative to the friction force, until line probe 120 ultimately starts to again move in the direction of travel of fishing line 20.

This backwards slip may increase the risk that the processor incorrectly calculates the direction of fishing line 20, if a high sensitivity setting (such as a low accelerometer movement threshold or a low alert movement threshold) are used, such that the backwards slip is registered as a movement signal. As noted above, processor may be configured to take an average of movement signals, or applying a greater weighting to consecutive movement signals in the same direction, which can reduce the risk of any incorrect calculation of line direction. However, in the first mode, in some situations it may nevertheless prove preferable to increase the alert movement threshold to reduce the risk of a false indication of direction. In the second mode, however, as direction is not being measured and the processor is simply determining whether any movement has occurred, this issue does not arise, and faster and more sensitive detection of movement may be possible.

A third, or hybrid, detection mode combines the advantages of the first and second operating modes. In the hybrid detection mode, the processor is configured to instruct to instruct the alarm to issue the alert before the processor completes determining the direction of movement of a fishing line in contact with the line probe. For instance, the processor may be configured to instruct the alarm to issue the alert until the processor determines the direction of movement of fishing line 20. The processor may then instruct the alarm to modify the alert to indicate the detected direction of movement of the fishing line 20 once the processor determines the direction in which fishing line 20 is moving. For instance, the processor may instruct the alarm to issue a directionless movement alert until the processor determines the direction of movement of fishing line 20, and instruct the alarm to issue a forwards movement alert or a backwards movement alert once the processor determines the direction in which the fishing line is moving. The third detection mode allows higher sensitivities to be used, while the direction of line 20 is still accurately detected. The third detection mode also allows a user of bite detector 100 to be alerted faster, while direction is still being determined.

The processor is configured to switch between each of the first, second and third detection modes as required. Specifically, process may be configured to permit each detection mode to be selected by a user of bite detector 100.

The alarm may be configured to continue the alert for a predetermined time after the detected movement has ended. The predetermined alert time may be adjustable, and may be adjustable by a user.

The alerts issued by the alarm can be in any form. In examples, the alerts can comprise one or more of audio, visual and vibratory alerts. Bite detector 100 may comprise either or both of a visual indicator 170 and audio indicator 180 to respectively issue the visual and audio alert. Bite detector 100 may allow for parameters of alerts to be adjusted. For example, bite detector 100 may allow one or more of the volume, the tone and the duration of an audio alert to be adjusted, and may comprise volume control 210 and/or tone control 220 to achieve this. For example, bite detector 100 may allow one or more of the brightness, the colour and the duration of a visual alert to be adjusted. For example, bite detector 100 may allow one or more of the magnitude, the frequency and the duration of a vibratory alert to be adjusted.

The processor may further comprise a security mode which can be activated. In the security mode, the alarm acts as a theft alarm to prevent unauthorised tampering or theft of bite detector 100. In the security mode, the processor is further configured to analyse each movement signal to determine whether housing 110 of bite detector 100 has been moved by more than a theft threshold. The processor is configured to instruct the alarm to issue a theft alert when the processor determines whether housing 110 of bite detector 100 has been moved by more than a theft threshold. The security mode can be activated by a user.

### Remote Unit

Bite detector 100 may be configured to operate with a remote unit 1000 (see figure 10). Specifically, the processor of bite detector 100 may be configured to communicate with remote unit 1000. Bite detector 100 may comprise a wireless transmitter or wireless transceiver, and in particular the processor can communicate with a wireless transceiver 1100 of remote unit 1000 using the wireless transmitter or wireless transceiver. Wireless transceiver 1100 may communicate with bite detector 100 through any conventional communication means, such as radio, a wireless data connection, Bluetooth, or a cellular data network.

The processor of bite detector 100 may be configured to send an alarm signal 1210 to remote unit 1000 to indicate that accelerometer 200 of bite detector 100 has detected movement of fishing line 20. Specifically, the processor of bite detector 100 may be configured to send alarm signal 1210 to a wireless receiver or transceiver of remote remote unit 1000, such as wireless transceiver 1100. Remote unit 1000 may comprise alarm unit 1200 which then alerts a user of the remote unit to the detected movement of line 20.

The alarm signal 1210 may further indicate the direction of movement of fishing line 20, and alarm unit 1200 may be configured to alert the user to the direction of movement of fishing line 20. In particular, alarm unit 1200 may be configured to alert the user as to whether fishing line 20 is moving forwards (i.e. to the left in the point of view used in figure 1), or moving backwards (i.e. to the right in the point of view used in figure 1), or in other words, whether fishing line 20 is moving along notch axis A-A or in the plane containing notch axis A-A.

Alarm signal 1210 may alternatively or additionally indicate that fishing line 20 is vibrating without net movement, and alarm unit 1200 may be configured to alert the user that the fishing line is vibrating without net movement. In view of this, alarm unit 1200 may issue forwards, backwards and directionless movement alerts in the same or a similar manner as the alarm of bite detector 100. In the same or a similar manner as the alarm of bite detector 100, alarm unit 1200 of remote unit 1000 may be configured to continue to alert the user for a predetermined time after the detected movement has ended. This predetermined alert time may be adjustable, and may be adjustable by a user.

Remote unit 1000 may further comprise user interface 1300 and control unit 1400. Control unit 1400 is adapted to transmit, via wireless transceiver 1100, at least one control signal 1410 to bite detector 100 for controlling bite detector 100 in response to a user interacting with user interface 1300. For instance, user interface 1300 may allow the user to adjust, via control unit 1400, one or more parameters of bite detector 100. In particular, these parameters may include one or more of the accelerometer activation threshold, the accelerometer movement threshold, the accuracy threshold, the alert movement threshold, the alert time, the parameters of the alert, the orientation movement threshold, the minimum period, the detection mode of the processor and whether the security mode is active.

The wireless transceiver of bite detector 100 may receive control signal 1410, and the processor may adjust one of more parameters of bite detector 100 based on the control signal 1410. As noted above, these parameters may include one or more of the accelerometer activation threshold, the accelerometer movement threshold, the accuracy threshold, the alert movement threshold, the alert time, the parameters of the alert, the orientation movement threshold, the minimum period, the detection mode of the processor and whether the security mode is active.

Bite detector 100 and remote unit 1000 may be provided together as a kit of parts.

### Software

An exemplary computer-implemented method, that may be executed by a processor such as the processor of bite detector 100, comprises receiving one or more accelerometer movement signals, for example from accelerometer 200, analysing the one or more movement signals, and determining that the one or more accelerometer movement signals indicate that a fishing line, such as fishing line 20 as exemplified below, has moved.

Determining that the one or more accelerometer movement signals indicate that fishing line 20 has moved may comprise determining the direction of movement of fishing line 20. That is, the computer-implemented method may comprise receiving the one or more accelerometer movement signals, analysing the one or more movement signals, and determining the direction of movement of the fishing line 20. Determining the direction of movement of fishing line 20 may comprise determining that fishing line 20 is moving in a first direction or a second direction, wherein the second direction is opposite the first direction. The first direction may correspond with the forwards direction as discussed above (i.e. when line 20 is being pulled away from the bank, to the left in the point of view used in figure 1) and the second direction may correspond with the backwards direction as discussed above (i.e. when line 20 is running backwards towards the bank, to the right in the point of view used in figure 1). Determining the direction of movement of fishing line 20 may further comprise determining that fishing line 20 is vibrating without net movement.

The method may further comprise analysing periodic accelerometer orientation signals to periodically determine the current orientation of accelerometer 200. For example, determining the current orientation of accelerometer may comprise taking a moving average of 2, 3, 4, 5, 6, 7, 8, 9, 10 or more movement signals as the current orientation of accelerometer 200. Determining the direction of movement of fishing line 20 may comprise adjusting the direction of movement of fishing line 20 to account for the current orientation of accelerometer 200.

Analysing the one or more movement signals may comprise taking an average of two or more movement signals to produce an average movement signal. For example, a moving average of 2, 3, 4, 5, 6, 7, 8, 9, 10 or more movement signals may be taken to determine the average movement signal. Determining the direction of movement of fishing line 20 may comprise determining the direction of movement of fishing line 20 using the average movement signal.

An exemplary computer program product or computer readable medium may comprise instructions, which when executed by a processor such as the processor of bite detector 100, carry out the computer implemented method. A kit of parts comprising such a computer program product or computer readable medium or the processor may be provided in combination with bite detector 100, and additionally or alternatively remote unit 1000.

While the preceding description contains many specifics, these specifics should not be construed as limitations on the scope of the invention, but merely as examples of embodiments of the invention. Those skilled in the art will envision other possible variations that are within the scope and spirit of the invention as defined by the following claims.

**Glossary of Reference Numerals used in Figures**

| | | | |
|---|---|---|---|
| 10 | Fishing rod | 131 | Cradle |
| 20 | Fishing line | 132 | Shoulder portion |
| 100 | Bite detector | 133 | Contact surface |
| 110 | Housing | 134 | Bush aperture |
| 112 | Housing aperture | 135 | Mounting portion |
| 115 | Rod rest | 136 | Cradle curved surface |
| 120 | Line probe | 138 | Bush flange |
| 121 | Line rest portion | 139 | Inclined surface |
| 122 | Notch | 140 | Accelerometer PCB |
| 123 | Axle | 142 | FPC connector |
| 124 | Connection portion | 144 | Mounting aperture |
| 125 | Mounting protrusion | 150 | Main PCB |
| 126 | Line probe first end | 160 | Flexible connection |
| 127 | Line probe second end | 170 | Visual Indicator |
| 128 | Line probe curved surface | 180 | Audio Indicator |
| 129 | Line probe flange | 190 | Spigot |
| 130 | Bush | 200 | Accelerometer |
| 210 | Volume control | 1200 | Alarm unit |
| 220 | Tone control | 1210 | Alarm signal |
| A-A | Notch Axis | 1300 | User interface |
| F1 | Force | 1400 | Control unit |
| F2 | Counteracting Force | 1410 | Control signal |
| 1000 | Remote unit | | |
| 1100 | Wireless transceiver | | |

### Aspects

The following list of aspects forms part of the description:
1. A bite detector for detecting motion of a fishing line, the bite detector comprising:
   a line probe comprising a line rest portion, the line rest portion being configured to contact a fishing line; and
   an accelerometer connected to the line probe;
   wherein the accelerometer is configured to detect movement of the line probe caused by movement relative to the line probe of a fishing line in contact with the line rest portion.
2. The bite detector of aspect 1, wherein the bite detector defines a notch defining a notch axis, the notch being configured to support the fishing line and permit linear movement of the fishing line along the notch axis, optionally wherein the notch has a V-shaped cross section.
3. The bite detector of aspect 2, wherein the line rest portion comprises the notch.
4. The bite detector of aspect 1 or aspect 2, further comprises a rod rest configured to support a fishing rod when a fishing line of the rod is supported by the line rest portion of the line probe.
5. The bite detector of any preceding aspect, wherein the bite detector further comprises a housing containing the accelerometer, wherein the line rest portion protrudes from the housing, wherein the line probe further comprises a connection portion inside the housing, wherein the accelerometer is coupled to the connection portion.
6. The bite detector of aspect 5, wherein the line rest portion is at a first end of the line probe, and the connection portion is at a second end of the line probe.
7. The bite detector of aspects 5 or 6, wherein the line rest portion is connected to the connection portion by an axle.
8. The bite detector of any of aspects 5 to 7, wherein the connection portion comprises a mounting protrusion, wherein the bite detector further comprises an accelerometer PCB, wherein the accelerometer is fixed to the accelerometer PCB, wherein the accelerometer PCB comprises a mounting aperture, wherein the mounting protrusion extends through the mounting aperture.
9. The bite detector of aspect 8, wherein the accelerometer or accelerometer PCB is fixed to the connection portion with adhesive, optionally wherein the mounting protrusion is fixed to the mounting aperture with adhesive.
10. The bite detector of any of aspects 5 to 9, wherein movement of the line probe in a first direction results in movement of the accelerometer in a second direction opposite to the first direction.
11. The bite detector of any of aspects 5 to 10, wherein the housing further comprises a housing aperture, wherein the line probe protrudes from the housing through the housing aperture, wherein the line probe and housing aperture are dimensioned to permit movement of the line probe when a fishing line in contact with the line probe moves with respect to the line probe.
12. The bite detector of aspect 11, further comprising a bush comprising a bush aperture, wherein the bush is positioned in the housing aperture and the line probe is movably mounted within the bush aperture, wherein the line probe and bush aperture are dimensioned to permit movement of the line probe when a fishing line in contact with the line probe moves with respect to the line probe.
13. The bite detector of aspect 12, wherein the bush comprises a cradle configured to support the line probe while permitting the line probe to move with respect to the bush with a rocking motion.
14. The bite detector of aspect 13, wherein the cradle comprises a curved surface, wherein the line probe further comprises a curved surface configured to contact the curved surface of the cradle, wherein the curved surfaces are complimentary or partially complimentary, wherein the curved surfaces permit the rocking motion.
15. The bite detector of aspect 14, wherein the cradle curved surface is a concave surface, wherein the concave surface is substantially cylindrical, wherein the line probe curved surface is a convex surface, wherein the convex surface is substantially cylindrical.
16. The bite detector of aspect 15 when dependent on aspect 2, wherein the respective axes of the substantially cylindrical surfaces are parallel to each other, and wherein the respective axes of the cylindrical surfaces are both perpendicular to the notch axis.
17. The bite detector of any of aspects 12 to 16, wherein the bush comprises a bush flange, wherein the line probe comprises a line probe flange extending at least partially around the bush flange, optionally wherein the line probe flange is concentric with the bush flange.
18. The bite detector of any of aspects 12 to 16, wherein the line probe comprises a line probe flange extending partially around the bush.
19. The bite detector of aspects 12 to 18, wherein the bush further comprises a mounting portion and a shoulder portion protruding from the bush, wherein the mounting portion is configured to protrude through housing aperture, wherein the shoulder portion comprises a contact surface complimentary to the surface of the housing adjacent to the housing aperture, wherein the contact surface contacts the surface of the housing adjacent to the housing aperture.
20. The bite detector of aspects 12 to 19, wherein the bush is fixed to the housing with adhesive.
21. The bite detector of aspect 19, wherein the contact surface is fixed to the surface of the housing adjacent to the aperture with adhesive.
22. The bite detector of aspect 19 or 21, wherein the mounting portion has an interference fit with the housing aperture.
23. The bite detector of aspect 19, 21 or 22, wherein an outer portion of the shoulder portion comprises an inclined surface that tapers towards the contact surface in a direction away from the bush aperture.
24. The bite detector of any preceding aspect, wherein the bite detector is water-resistant.
25. The bite detector of any preceding aspect, wherein the accelerometer or accelerometer PCB is in direct contact with and fixed to the line probe.
26. The bite detector of any preceding aspect, wherein the accelerometer is a three-axis accelerometer.
27. The bite detector of any preceding aspect, further comprising a main PCB, wherein the accelerometer is electrically connected to the main PCB by a flexible connection, optionally wherein the flexible connection is a ribbon cable or flexible flat cable.
28. The bite detector of aspect 27, wherein the flexible connection is configured to bend and apply a force to the line probe when a fishing line is in contact with the line rest portion, the force being in a direction towards the line rest portion and being configured to improve contact between the fishing line and the line rest portion.
29. The bite detector of aspect 27 or 28, wherein the accelerometer is physically coupled to the bite detector by exactly two physical connections, wherein the physical connections are the flexible connection and the line probe.
30. The bite detector of any preceding aspect, wherein the accelerometer is configured to operate in an idle mode with reduced power consumption until the accelerometer detects movement greater than a predetermined accelerometer activation threshold.
31. The bite detector of aspect 30, wherein the accelerometer activation threshold is adjustable, optionally wherein the accelerometer activation threshold is adjustable by a user of the bite detector.
32. The bite detector of any preceding aspect, wherein the bite detector further comprises a spigot for connecting the bite detector to a bank stick.
33. The bite detector of any preceding aspect, wherein the bite detector comprises an onboard power supply, optionally a battery, configured to power any electronic components of the bite detector.
34. The bite detector of any preceding aspect, wherein the accelerometer or accelerometer PCB further comprise a processor.
35. The bite detector of any preceding aspect, further comprising a processor connected to the accelerometer.
36. The bite detector of aspect 35 when dependent on aspect 27, wherein the processor is mounted to the main PCB, and wherein the accelerometer is electrically connected to the processor by the flexible connection.
37. The bite detector of any of aspects 34 to 36, wherein the accelerometer is configured to generate a movement signal in response to movement that is detected, wherein the accelerometer is further configured to send each movement signal to the processor.
38. The bite detector of any of aspects 34 to 36, wherein the accelerometer is configured to generate a movement signal in response to each movement that has a magnitude greater than an accelerometer movement threshold that is detected, wherein the accelerometer is further configured to send each movement signal to the processor.
39. The bite detector of aspect 38, wherein the accelerometer movement threshold is adjustable, optionally wherein the accelerometer movement threshold is adjustable by a user of the bite detector.
40. The bite detector of any of aspects 37 to 39, wherein the processor is configured to analyse each movement signal to determine that a fishing line in contact with the line probe has moved.
41. The bite detector of any preceding aspect, wherein detecting movement of the line probe comprises detecting the direction of movement of the line probe.
42. The bite detector of aspect 41 when dependent on aspect 2, wherein detecting movement of the line probe comprises detecting movement of the line probe in either direction along the notch axis or in the plane containing the notch axis.
43. The bite detector of any of aspects 41 or 42 when dependent on aspect 37, wherein each movement signal indicates a direction of movement of the line probe.
44. The bite detector of aspect 43, wherein the processor is configured to analyse each movement signal to determine the direction of movement of a fishing line in contact with the line probe.
45. The bite detector of aspect 44 when dependent on aspect 2, wherein determining the direction of movement of a fishing line in contact with the line probe comprises determining that the fishing line is moving in a first direction or a second direction along the notch axis or in the plane containing the notch axis, wherein the second direction is opposite the first direction.
46. The bite detector of aspect 44 or 45, wherein the processor is further configured to determine that a fishing line in contact with the line probe is vibrating without net movement.
47. The bite detector of any of aspects 34 to 46, wherein the accelerometer is further configured to periodically generate a device orientation signal indicating the orientation of the device and send each device orientation signal to the processor, wherein the processor is configured to analyse each device orientation signal to determine the current orientation of the bite detector.
48. The bite detector of aspect 47 when dependent on aspect 44, wherein analysing the movement signal and determining the direction of movement of a fishing line in contact with the line probe further comprises adjusting each movement signal to account for the current orientation of the bite detector.
49. The bite detector of aspect 47 or aspect 48, wherein the accelerometer is configured to periodically generate the device orientation signal only if the accelerometer has not detected a change in movement or change in movement above a orientation movement threshold for a minimum period, optionally wherein the threshold and/or period of time are adjustable, optionally wherein the threshold and/or period of timer are adjustable by a user.
50. The bite detector of any of aspects 34 to 49 when dependent on aspect 44, wherein analysing the movement signal and determining the direction of movement of a fishing line in contact with the line probe further comprises:
   taking an average of two or more movement signals to produce an average movement signal;
   determining the direction of movement of the fishing line using the average movement signal.
51. The bite detector of any preceding aspect, further comprising an alarm configured to issue an alert when movement is detected by the accelerometer.
52. The bite detector of aspect 51 when dependent on aspect 40, wherein the processor is configured to instruct the alarm to issue the alert when the processor determines that a fishing line in contact with the line probe has moved by greater than an alert movement threshold.
53. The bite detector of aspect 52, wherein the alert movement threshold is adjustable, optionally wherein the alert movement threshold is adjustable by a user of the bite detector.
54. The bite detector of any of aspects 51 to 53, when dependent on aspect 41, wherein the alert is configured to indicate the detected direction of movement of the fishing line.
55. The bite detector of aspect 54 when dependent on aspect 45, wherein the alert comprises a forwards movement alert that indicates to the user that the line is moving forwards when the processor determines that a fishing line in contact with the line probe is moving in the first direction, wherein the alert comprises a backwards movement alert that indicates to the user that the line is moving backwards when the processor determines that a fishing line in contact with the line probe is moving in the second direction.
56. The bite detector of aspect 55 when dependent on aspect 46, wherein the processor is further configured to instruct the alarm to issue a directionless movement alert when the processor determines that a fishing line in contact with the line probe is vibrating without net movement.
57. The bite detector of any of aspects 52 to 56 when dependent on aspect 44, wherein the processor comprises a direction detection mode in which the processor is configured to instruct the alarm to issue the alert after the processor has determined the direction of movement of a fishing line in contact with the line probe.
58. The bite detector of any of aspects 52 to 57 when dependent on aspect 44, wherein the processor comprises a directionless detection mode in which the processor is configured to instruct the alarm to issue the alert and not determine the direction of movement of a fishing line in contact with the line probe.
59. The bite detector of any of aspects 52 to 58 when dependent on aspect 44, wherein the processor comprises a hybrid detection mode in which the processor is configured to instruct the alarm to issue the alert before the processor completes determining the direction of movement of a fishing line in contact with the line probe.
60. The bite detector of aspect 59 when dependent on aspect 54, wherein the processor is further configured to instruct the alarm to issue the alert until the processor determines the direction of movement of a fishing line in contact with the line probe, wherein the processor is configured to instruct the alarm to modify the alert to indicate the detected direction of movement of the fishing line once the processor determines the direction in which the fishing line is moving.
61. The bite detector of aspect 59 when dependent on aspect 56, wherein the processor is further configured to instruct the alarm to issue the directionless movement alert until the processor determines the direction of movement of a fishing line in contact with the line probe, wherein the processor is configured to instruct the alarm to issue the forwards movement alert or the backwards movement alert once the processor determines the direction in which the fishing line is moving.
62. The bite detector of any of aspects 58 to 61 when dependent on aspect 57, or aspect 59 to 61 when dependent on aspect 57, 58, or both aspects 57 and 58, wherein the processor is configured to switch between the detection modes, optionally wherein the processor is configured to permit the detection mode to be switched by a user.
63. The bite detector of any of aspects 51 to 62, wherein the alarm is configured to continue the alert for a predetermined alert time after movement is no longer detected, optionally wherein the predetermined alert time is adjustable, optionally wherein the predetermined alert time is adjustable by the user.
64. The bite detector of any of aspects 51 to 63, wherein the alert comprises an audio alert, optionally wherein bite detector allows one or more parameters of the alert to be adjusted, optionally wherein the parameters comprise one or more of the volume, the tone and the duration of the audio alert.
65. The bite detector of any of aspects 51 to 64, wherein the alert comprises a visual alert, optionally wherein bite detector allows one or more parameters of the alert to be adjusted, optionally wherein the parameters comprise one or more of the brightness, the colour and the duration of the visual alert.
66. The bite detector of any of aspects 51 to 65, wherein the alert comprises a vibratory alert, optionally wherein bite detector allows one or more parameters of the alert to be adjusted, optionally wherein the parameters comprise one or more of the magnitude, the frequency and the duration of the vibratory alert.
67. The bite detector of any of aspects 52 to 66 when dependent on aspects 5 and 37, wherein the processor comprises a security mode which can be activated, wherein in the security mode the processor is further configured to analyse each movement signal to determine whether the housing of the bite detector has been moved by more than a theft threshold, wherein the processor is configured to instruct the alarm to issue a theft alert when the processor determines whether the housing of the bite detector has been moved by more than a theft threshold, optionally wherein the security mode can be activated by a user.
68. The bite detector of any of aspects 34 to 67, wherein the processor is configured to communicate with a remote unit.
69. The bite detector of aspect 68, wherein the bite detector further comprises a wireless transmitter, and wherein the processor is configured to communicate with the remote unit via the wireless transmitter.
70. The bite detector of aspect 68 or 69, wherein the processor is configured to send an alarm signal to the remote unit when movement is detected.
71. The bite detector of aspect 70, when dependent on aspect 41, wherein the processor is configured to send the direction of movement to the remote unit when movement is detected.
72. The bite detector of aspect 70, when dependent on aspect 45, wherein sending the direction of movement to the remote unit comprises sending a signal to the remote unit indicating whether a fishing line is moving in the first direction or in the second direction along the notch axis or in the plane containing the notch axis.
73. The bite detector of aspect 71 or 72, when dependent on aspect 46, wherein sending the direction of movement to the remote unit comprises sending a signal to the remote unit indicating whether a fishing line is vibrating without net movement.
74. The bite detector of any of aspects 68 to 73, wherein the wireless transmitter is a wireless transceiver, and wherein the processor is configured to adjust one or more parameters of the bite detector based on a control signal received from the remote unit by the wireless tranceiver, optionally wherein the one or more parameters comprise the accelerometer activation threshold, the accelerometer movement threshold, the accuracy threshold, the alert movement threshold, the alert time and the parameters of the alert, the orientation movement threshold, the minimum period, the detection mode of the processor and whether the security mode is active.
75. A remote unit configured to communicate with the bite detector of any of aspects 70 to 74, the remote unit comprising:
   a wireless receiver adapted to receive an alarm signal from the bite detector indicating that the accelerometer of the bite detector has detected movement of a fishing line; and
   an alarm unit configured to alert a user to the detected movement.
76. The remote unit of aspect 75, wherein the alarm signal further indicates the direction of movement of a fishing line, and wherein the alarm unit is further configured to alert a user to the direction of movement of the fishing line.
77. The remote unit of aspect 76, wherein alerting the user to the direction of movement comprises alerting the user as to whether the fishing line is moving in a first direction or a second direction, wherein the second direction is opposite the first direction.
78. The remote unit of any of aspects 75 to 77, wherein the alarm signal further indicates that a fishing line in contact with the line probe is vibrating without net movement, wherein the alarm unit is further configured to alert the user that the fishing line is vibrating without net movement.
79. The remote unit of any of aspects 75 to 78, wherein the alarm unit is configured to continue to alert the user for a predetermined time after movement is no longer detected.
80. The remote unit of any of aspects 75 to 79, further comprising:
   a user interface; and
   a control unit
   wherein the wireless receiver is a wireless transceiver, and wherein the control unit is adapted to transmit via the wireless transceiver at least one control signal to the bite detector for controlling the bite detector in response to a user interacting with the user interface.
81. The remote unit of aspect 80, wherein the user interface allows the user to adjust, via the control unit, one or more parameters of the bite detector, optionally wherein the parameters include one or more of the accelerometer activation threshold, the accelerometer movement threshold, the accuracy threshold, the alert movement threshold, the alert time, the parameters of the alert, the orientation movement threshold, the minimum period, the detection mode of the processor and whether the security mode is active.
82. A kit of parts comprising the remote unit of any of aspects 75 to 81 and the bite detector of any of aspects 1 to 74.
83. A computer-implemented method, the method comprising:
   receiving one or more accelerometer movement signals;
   analysing the one or more movement signals;
   determining that the one or more accelerometer movement signals indicate that a fishing line has moved.
84. The computer-implemented method of aspect 83, wherein determining that the one or more accelerometer movement signals indicate that a fishing line has moved comprises determining the direction of movement of the fishing line.
85. The computer-implemented method of aspect 84, wherein determining the direction of movement of the fishing line comprises determining that the fishing line is moving in a first direction or a second direction, wherein the second direction is opposite the first direction.
86. The computer-implemented method of aspect 84 or 85, wherein determining the direction of movement of a fishing line comprises determining that the fishing line is vibrating without net movement
87. The computer-implemented method of any of aspects 83 to 86, wherein the method further comprises analysing periodic accelerometer orientation signals to periodically determine the current orientation of the accelerometer.
88. The computer-implemented method of aspect 87 when dependent on aspect 84, wherein determining the direction of movement of the fishing line comprises adjusting the direction of movement of the fishing line to account for the current orientation of the accelerometer.
89. The computer-implemented method of any of aspects 84 to 88, wherein analysing the one or more movement signals comprises taking an average of two or more movement signals to produce an average movement signal, and wherein determining the direction of movement of the fishing line comprises determining the direction of movement of the fishing line using the average movement signal.
90. The computer-implemented method of any of aspects 83 to 89, wherein the accelerometer is the accelerometer of any of aspects 1 to 74.
91. A processor configured to perform the method of any one of aspects 83 to 90.
92. A computer program product comprising instructions which, when executed by a processor, cause the processor to carry out the method of any one of aspects 83 to 90.
93. A computer-readable medium comprising instructions which, when executed by a processor, cause the processor to carry out the method of any one of aspects 83 to 90.
94. The processor of aspect 91, computer program product of aspect 92 or computer-readable medium of aspect 93, wherein the processor is the processor the bite detector of any one of aspects 34 to 74.
95. A kit of parts comprising the processor of aspect 91 or 94, computer program product of aspect 92 or 94 or computer-readable medium of aspect 93 or 94 and the bite detector of any of aspects 1 to 74, optionally wherein the assembly further comprises the remote unit of any one of aspects 75 to 82.

### Embodiments

The following list of embodiments forms part of the description:
1. A bite detector for detecting motion of a fishing line, the bite detector comprising:
   a line probe comprising a line rest portion, the line rest portion being configured to contact a fishing line; and
   an accelerometer connected to the line probe;
   wherein the accelerometer is configured to detect movement of the line probe caused by movement relative to the line probe of a fishing line in contact with the line rest portion.
2. The bite detector of embodiment 1, wherein the line rest portion defines a notch defining a notch axis, the notch being configured to support the fishing line and permit linear movement of the fishing line along the notch axis, optionally wherein the notch has a V-shaped cross section.
3. The bite detector of any preceding embodiment, wherein the bite detector further comprises a housing containing the accelerometer, wherein the line rest portion protrudes from the housing, wherein the line probe further comprises a connection portion inside the housing, wherein the accelerometer is coupled to the connection portion.
4. The bite detector of embodiment 3, wherein the connection portion comprises a mounting protrusion, wherein the bite detector further comprises an accelerometer PCB, wherein the accelerometer is fixed to the accelerometer PCB, wherein the accelerometer PCB is in direct contact with and fixed to the line probe via a mounting aperture in the accelerometer PCB, wherein the mounting protrusion extends through the mounting aperture.
5. The bite detector of any of embodiments 3 or 4, further comprising a bush comprising a bush aperture, wherein the housing further comprises a housing aperture, wherein the bush is positioned in the housing aperture and the line probe is movably mounted within the bush aperture, wherein the line probe and bush aperture are dimensioned to permit movement of the line probe when a fishing line in contact with the line probe moves with respect to the line probe.
6. The bite detector of embodiment 5, wherein the bush comprises a cradle configured to support the line probe while permitting the line probe to move with respect to the bush with a rocking motion, wherein the cradle comprises a curved surface, wherein the line probe further comprises a curved surface configured to contact the curved surface of the cradle, wherein the curved surfaces are complimentary or partially complimentary, wherein the curved surfaces permit the rocking motion.
7. The bite detector of any preceding embodiment, further comprising a main PCB, wherein the accelerometer is electrically connected to the main PCB by a flexible connection, wherein the flexible connection is configured to bend and apply a force to the line probe when a fishing line is in contact with the line rest portion, the force being in a direction towards the line rest portion and being configured to improve contact between the fishing line and the line rest portion.
8. The bite detector of embodiment 7, wherein the accelerometer is physically coupled to the bite detector by exactly two physical connections, wherein the physical connections are the flexible connection and the line probe.
9. The bite detector of any preceding embodiment, further comprising a processor connected to the accelerometer, wherein the accelerometer is configured to generate a movement signal in response to movement that is detected, wherein the accelerometer is further configured to send each movement signal to the processor.
10. The bite detector of embodiment 9 when dependent on embodiment 7, wherein the processor is mounted to the main PCB, and wherein the accelerometer is electrically connected to the processor by the flexible connection.
11. The bite detector of embodiment 9 or 10, wherein the processor is configured to analyse each movement signal to determine that a fishing line in contact with the line probe has moved.
12. The bite detector of any preceding embodiment, wherein detecting movement of the line probe comprises detecting the direction of movement of the line probe.
13. The bite detector of embodiment 12 when dependent on embodiment 9, wherein each movement signal indicates a direction of movement of the line probe, wherein the processor is configured to analyse each movement signal to determine the direction of movement of a fishing line in contact with the line probe.
14. The bite detector of embodiment 13, wherein the processor is further configured to determine that a fishing line in contact with the line probe is vibrating without net movement.
15. The bite detector of embodiment 13 or 14, wherein the accelerometer is further configured to periodically generate a device orientation signal indicating the orientation of the device and send each device orientation signal to the processor, wherein the processor is configured to analyse each device orientation signal to determine the current orientation of the bite detector, wherein analysing the movement signal and determining the direction of movement of a fishing line in contact with the line probe further comprises adjusting each movement signal to account for the current orientation of the bite detector.
16. The bite detector of any of embodiments 13 to 15, further comprising an alarm configured to issue an alert when movement is detected by the accelerometer, wherein the processor is configured to instruct the alarm to issue the alert when the processor determines that a fishing line in contact with the line probe has moved by greater than an alert movement threshold, wherein the alert is configured to indicate the detected direction of movement of the fishing line.
17. The bite detector of any of embodiments 16, wherein the processor comprises a direction detection mode in which the processor is configured to instruct the alarm to issue the alert after the processor has determined the direction of movement of a fishing line in contact with the line probe.
18. The bite detector of embodiment 16 or 17, wherein the processor comprises a directionless detection mode in which the processor is configured to instruct the alarm to issue the alert and not determine the direction of movement of a fishing line in contact with the line probe.
19. The bite detector of embodiment 16 or 18, wherein the processor comprises a hybrid detection mode in which the processor is configured to instruct the alarm to issue the alert before the processor completes determining the direction of movement of a fishing line in contact with the line probe, wherein the processor is further configured to instruct the alarm to issue the alert until the processor determines the direction of movement of a fishing line in contact with the line probe, wherein the processor is configured to instruct the alarm to modify the alert to indicate the detected direction of movement of the fishing line once the processor determines the direction in which the fishing line is moving.
20. The bite detector of any of embodiments 13 to 19, wherein the processor is configured to communicate with a remote unit, wherein the bite detector further comprises a wireless transmitter, and wherein the processor is configured to communicate with the remote unit via the wireless transmitter, wherein the processor is configured to send an alarm signal to the remote unit when movement is detected, wherein the processor is configured to send the direction of movement to the remote unit when movement is detected.
21. A remote unit configured to communicate with the bite detector of embodiment 20, the remote unit comprising:
   a wireless receiver adapted to receive an alarm signal from the bite detector indicating that the accelerometer of the bite detector has detected movement of a fishing line; and
   an alarm unit configured to alert a user to the detected movement.
22. The remote unit of embodiment 21, wherein the alarm signal further indicates the direction of movement of a fishing line, and wherein the alarm unit is further configured to alert a user to the direction of movement of the fishing line.
23. A computer-implemented method, the method comprising:
   receiving one or more accelerometer movement signals;
   analysing the one or more movement signals;
   determining that the one or more accelerometer movement signals indicate that a fishing line has moved.
24. The computer-implemented method of embodiment 23, wherein determining that the one or more accelerometer movement signals indicate that a fishing line has moved comprises determining the direction of movement of the fishing line.
25. A processor configured to perform the method of embodiment 23 or 24, a computer program product comprising instructions which, when executed by a processor, cause the processor to carry out the method of embodiment 23 or 24, or a computer-readable medium comprising instructions which, when executed by a processor, cause the processor to carry out the method of embodiment 23 or 24.
26. A kit of parts comprising the bite detector of any of embodiments 1 to 20 and either or both of:
   the remote unit of embodiment 21 or 22, or
   one of the processor, the computer program product or the computer-readable medium of embodiment 25.

## Claims

1. A bite detector for detecting motion of a fishing line, the bite detector comprising:
a line probe comprising a line rest portion, the line rest portion being configured to contact a fishing line; and
an accelerometer connected to the line probe;
wherein the accelerometer is configured to detect movement of the line probe caused by movement relative to the line probe of a fishing line in contact with the line rest portion.

2. The bite detector of claim 1, wherein the line rest portion defines a notch defining a notch axis, the notch being configured to support the fishing line and permit linear movement of the fishing line along the notch axis, optionally wherein the notch has a V-shaped cross section.

3. The bite detector of any preceding claim, wherein the bite detector further comprises a housing containing the accelerometer, wherein the line rest portion protrudes from the housing, wherein the line probe further comprises a connection portion inside the housing, wherein the accelerometer is coupled to the connection portion.

4. The bite detector of any of claim 3, further comprising a bush comprising a bush aperture, wherein the housing further comprises a housing aperture, wherein the bush is positioned in the housing aperture and the line probe is movably mounted within the bush aperture, wherein the line probe and bush aperture are dimensioned to permit movement of the line probe when a fishing line in contact with the line probe moves with respect to the line probe.

5. The bite detector of any preceding claim, further comprising a main PCB, wherein the accelerometer is electrically connected to the main PCB by a flexible connection, wherein the flexible connection is configured to bend and apply a force to the line probe when a fishing line is in contact with the line rest portion, the force being in a direction towards the line rest portion and being configured to improve contact between the fishing line and the line rest portion, optionally wherein the accelerometer is physically coupled to the bite detector by exactly two physical connections, wherein the physical connections are the flexible connection and the line probe.

6. The bite detector of any preceding claim, further comprising a processor connected to the accelerometer, wherein the accelerometer is configured to generate a movement signal in response to movement that is detected, wherein the accelerometer is further configured to send each movement signal to the processor.

7. The bite detector of claim 6, wherein the processor is configured to analyse each movement signal to determine that a fishing line in contact with the line probe has moved, wherein detecting movement of the line probe comprises detecting the direction of movement of the line probe, wherein each movement signal indicates a direction of movement of the line probe, wherein the processor is configured to analyse each movement signal to determine the direction of movement of a fishing line in contact with the line probe.

8. The bite detector of any of claims 7, further comprising an alarm configured to issue an alert when movement is detected by the accelerometer, wherein the processor is configured to instruct the alarm to issue the alert when the processor determines that a fishing line in contact with the line probe has moved by greater than an alert movement threshold, wherein the alert is configured to indicate the detected direction of movement of the fishing line.

9. The bite detector of any of claims 8, wherein the processor comprises a direction detection mode in which the processor is configured to instruct the alarm to issue the alert after the processor has determined the direction of movement of a fishing line in contact with the line probe.

10. The bite detector of claim 8, wherein the processor comprises a hybrid detection mode in which the processor is configured to instruct the alarm to issue the alert before the processor completes determining the direction of movement of a fishing line in contact with the line probe, wherein the processor is further configured to instruct the alarm to issue the alert until the processor determines the direction of movement of a fishing line in contact with the line probe, wherein the processor is configured to instruct the alarm to modify the alert to indicate the detected direction of movement of the fishing line once the processor determines the direction in which the fishing line is moving.

11. The bite detector of any of claims 7 to 10, wherein the processor is configured to communicate with a remote unit, wherein the bite detector further comprises a wireless transmitter, and wherein the processor is configured to communicate with the remote unit via the wireless transmitter, wherein the processor is configured to send an alarm signal to the remote unit when movement is detected, wherein the processor is configured to send the direction of movement to the remote unit when movement is detected.

12. A remote unit configured to communicate with the bite detector of claim 11, the remote unit comprising:
a wireless receiver adapted to receive an alarm signal from the bite detector indicating that the accelerometer of the bite detector has detected movement of a fishing line; and
an alarm unit configured to alert a user to the detected movement, optionally wherein the alarm signal further indicates the direction of movement of a fishing line, and wherein the alarm unit is further configured to alert a user to the direction of movement of the fishing line.

13. A computer-implemented method, the method comprising:
receiving one or more accelerometer movement signals;
analysing the one or more movement signals;
determining that the one or more accelerometer movement signals indicate that a fishing line has moved, optionally wherein determining that the one or more accelerometer movement signals indicate that a fishing line has moved comprises determining the direction of movement of the fishing line.

14. A processor configured to perform the method of claim 13, a computer program product comprising instructions which, when executed by a processor, cause the processor to carry out the method of claim 13, or a computer-readable medium comprising instructions which, when executed by a processor, cause the processor to carry out the method of claim 13.

15. A kit of parts comprising the bite detector of any of claims 1 to 11 and either or both of:
the remote unit of claim 12, or
one of the processor, the computer program product or the computer-readable medium of claim 14.
